# EUROPEAN PATENT APPLICATION

(11) **EP 2 447 871 A1**
(43) Date of publication of application: **02.05.2012**
(21) Application number: 10306135.4
(22) Date of filing: 18.10.2010
(51) Int. Cl.: G06F 21/00

(54) **Challenge-based hosted parental control system for controlling access to internet contents**

(71) Applicant: Alcatel Lucent, 75007 Paris (FR)
(72) Inventor: Clevy, Laurent, 91620, Nozay (FR); Martin Antony, 91620, Nozay (FR)
(74) Representative: Nicolle, Olivier

(57) **Abstract**

A hosted parental control system relies on an application platform to execute access control protocols to protect controlled users from confronting age-inappropriate content. The access control protocols include proof-of-age challenges to ascertain the age/maturity of end users and filtering criteria that considers the age/maturity of end users as compared to the nature of the content (e.g., content rating) to determine which content is authorized to be accessed by particular users. The hosted parental control system further allows for community participation to formulate and/or enhance content ratings and proof-of-age challenges to be used in the access control protocols.

## Description

### FIELD OF THE INVENTION

This invention relates generally to communication systems and, more particularly, to parental controls/tools for controlling access to Internet contents (e.g., protecting certain underage users from accessing age-inappropriate content).

### BACKGROUND OF THE INVENTION

The Internet is a well-known communication system in which users can access or contribute content including, for example and without limitation, text, audio, video and image content or software via website articles, blogs, social networking sites or media sharing sites. Because virtually anyone may publish content on the Internet, and Internet content is indexed by search engines such as Google, it is not uncommon for users, including children, to find or confront disturbing or objectionable content, even from innocuous queries. It is a continuing challenge for parents or other responsible authorities to police use of the Internet by underage users and protect them from confronting disturbing or objectionable content.

Advantageously, users should be enabled to use the Internet to access content commensurate with their age/maturity level but blocked from viewing content that is deemed inappropriate for their age/maturity level, such as may be determined by content ratings or the like. However, it is a difficult problem to ascertain the age/maturity level of users, and parental controls/settings (including, e.g., passwords, filter settings, typically residing in the end user device) can be circumvented by children or underage users cracking/guessing passwords or disabling/uninstalling filter settings. Moroever, the nature of the content can be difficult to ascertain because content ratings may not exist; and content filtering based on keywords or URLs can yield false positives and exclude greater content than necessary as pertaining to certain users. Thus there is not an efficient way to determine which content should be blocked or enabled, and for which users.

### SUMMARY OF THE INVENTION

These problems are addressed and an advance is made in the art by a hosted parental control system that relies on a service enablement platform (i.e., a special-purpose application platform, not in the end user device) to execute access control protocols to protect users from confronting age-inappropriate content. The access control protocols include proof-of-age challenges to ascertain the age/maturity of end users and filtering criteria that considers the age/maturity of end users as compared to the nature of the content (e.g., content rating) to determine which content is authorized to be accessed by certain users. The hosted parental control system further allows for community participation to formulate and/or enhance content ratings and proof-of-age challenges to be used in the access control protocols.

### BRIEF DESCRIPTION OF THE DRAWINGS

The foregoing and other advantages of the invention will become apparent upon reading the following detailed description and upon reference to the drawings in which:
FIG. 1 is a block diagram of a hosted parental control system according to embodiments of the present invention.
FIG. 2 is a flowchart showing steps performed to execute a user profile registration feature of the hosted parental control system of FIG. 1.
FIG. 3 is a flowchart showing steps performed to execute user access control and filtering features of the hosted parental control system of FIG. 1.
FIG. 4 is a flowchart showing steps performed to enable community participation features of the hosted parental control system of FIG. 1.

### DESCRIPTION OF THE PREFERRED EMBODIMENT(S)

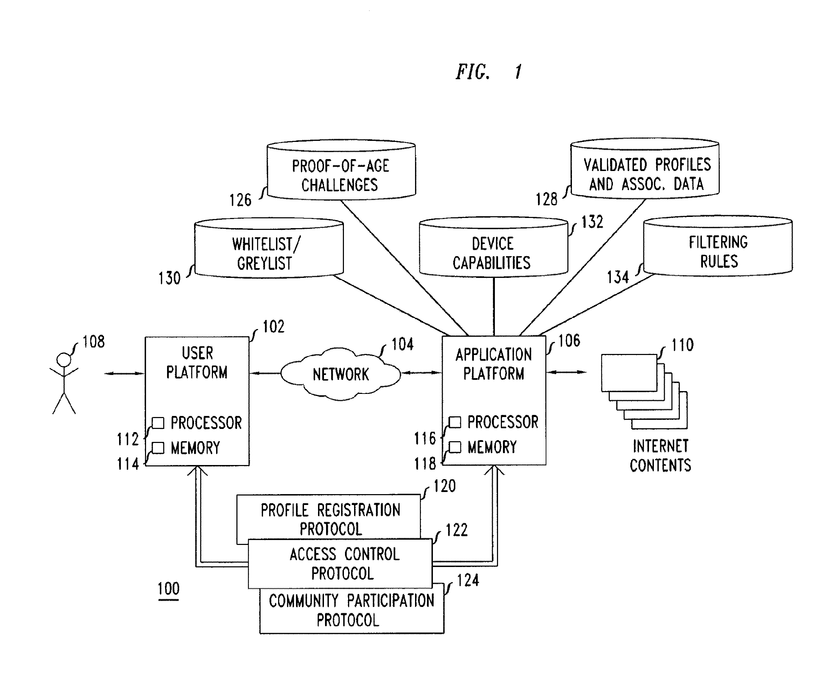

FIG. 1 depicts a communication system 100 including a user platform 102 interconnected by a communication network 104 to an application platform 106. The user platform 102 may comprise, for example and without limitation, a laptop computer, desktop computer or mobile computing device, nominally including a web brower, and which is subject to operation by a user 108 (i.e., person) for accessing (or attempting to access) Internet contents 110. The application platform 106 may comprise, for example and without limitation, a computer device or software application residing remotely from the user platform that executes an application program to perform some kind of activity or transaction with the user. In particular, in embodiments hereinafter to be described in greater detail, the application platform 106 performs services associated with a hosted parental control system, including user profile registration, access control and filtering, as well as community participation features to protect controlled users (e.g., children) from confronting age-inappropriate content.

The network 104 comprises generally any communication medium operable to link the user platform 102 to the application platform 106. The network 102 may comprise, without limitation, an IP Multimedia Subsystem (IMS) network, a wireless network (e.g., CDMA-based or GSM-based network), a circuit-switched network, a packet-based network (IP network) or another type of network.

The user platform 102 and application platform 106 each include a processor and memory for effecting transactions or segments of transactions between the respective platforms. As shown, the user platform 102 includes processor 112 and memory 114; and the application platform 106 includes processor 116 and memory 118. Generally, the processors 112, 116 are operable to execute respective program code (e.g., including but not limited to operating system firmware/software and application software) stored in the respective memory 114, 118, the execution of which depends at least in part from commands issued from the user 108.

According to embodiments of the present invention, the transactions or segments of transactions carried out between the respective platforms include a profile registration protocol 120, access control/filtering protocol 122 and community participation protocol 124 defining respective elements of the hosted parental control system. The application platform 106 is operably connected to and consults one or more databases when carrying out the respective protocols. As shown, the databases include a proof-of-age challenge database 126, validated profiles database 128, whitelist/greylist database 130, device capabilities database 132 and filtering rules database 134. As will be appreciated, the respective databases may be implemented in one or more physical devices.

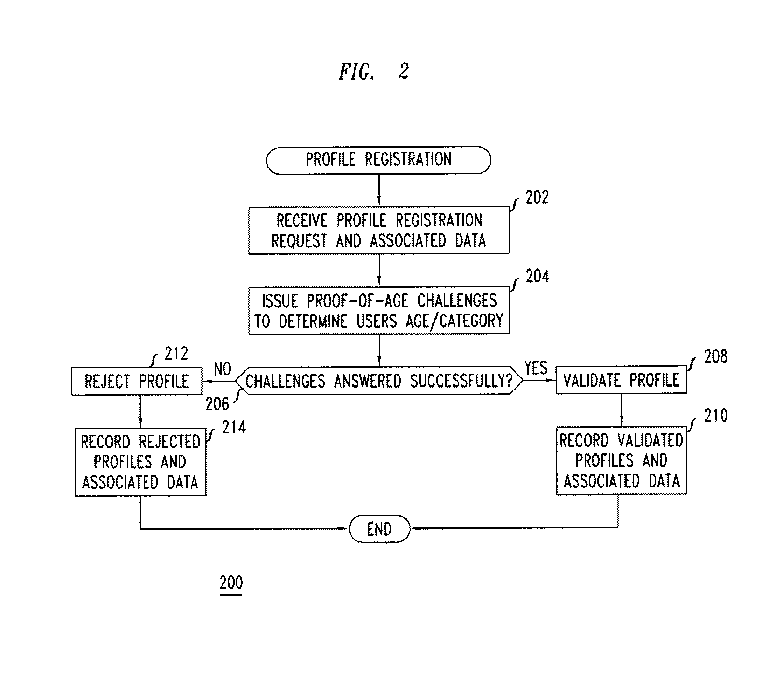

FIG. 2 is a flowchart showing steps performed to execute a user profile registration feature of the hosted parental control system of FIG. 1. The steps of FIG. 2 are performed, where applicable, by the application platform 106 in conjunction with the user 108 operating the user platform 102 to create and validate a user profile registration protocol 120. The method presumes that a user 108 will create a user profile, which is to be validated by the application platform 106 before the user 108 is permitted to access Internet contents 110.

At step 202, the application platform 106 receives a profile registration request and associated data from a user 108 attempting to create a user profile. The profile registration request may comprise for example, keystrokes, keystroke or keypad combinations or representations that convey a request to register a user profile. The associated data comprises, in one embodiment, a user identifier (e.g., user name or "nickname") and indicia of a claimed user age. For example, the indicia of a claimed user age may comprise a specified numerical age or age category (e.g., pre-teen, teen, adult) to which the user purports to belong. Optionally, the associated data may include a password uniquely associated with the user.

At step 204, the application platform issues one or more proof-of-age challenges to ascertain the validity of the claimed user age or age category. The proof-of-age challenges are obtained from the proof-of-age challenge database 126 or from a trusted third party platform (not shown) connected to the application platform. It is contemplated, for example, that proof-of-age challenges may be elaborated by educational institutions or other controlling authority having knowledge of expected competencies of various ages or age categories (for example, expected competencies of a student of the claimed age or age category in subjects of a school curriculum, or in daily life activities). Further, embodiments described herein allow for community involvement (e.g., from the community-at-large, including collectively, other registered users and parents) to contribute and propose proof-of-age challenges. As will be appreciated, the format of the proof-of-age challenges may characterize or include, without limitation, text, audio, video and/or image content.

Advantageously, the proof-of-age challenges will be compatible in format with the capabilities of the user platform 102, which in one example may be determined by consulting the device capabilities database 132. It is contemplated that the number of challenges may be quite high (for example and without limitation, up to 10) in the profile registration step, depending on the claimed age. For example, the higher the claimed age, the greater number of configured challenges might be employed to validate the claimed age or age category of the user 108.

Coincident to issuing proof-of-age challenges at step 204, the application platform receives and evaluates user responses. Optionally, the application platform may issue a CAPTCHA challenge-response test to ensure that the responses are generated by a human user, rather than a computer.

At step 206, the application platform determines whether the challenges were sufficiently answered (i.e., whether the responses were sufficiently accurate to validate the claimed age or age category). For example, depending on implementation, the application platform might require that all of the challenges are answered successfully, or perhaps may require a significant percentage, but not all, of the challenges to be successfully answered to validate the claimed age or age category of the user 108. The application platform may further require that answers be provided by the user in a limited amount of time (e.g., five or ten seconds), to limit the risk that the user can consult with another person or look for an answer on the Internet.

If the challenges are sufficiently answered, the process proceeds to step 208 where the application platform 106 validates the user profile. At step 210, the application platform 106 stores the validated profile and associated data in the validated profiles database 128. Thereafter, as will be described in greater detail in relation to FIG. 2, the application platform may consult the user profile associated with the user 108 to police Internet access requests from the user 108. For example and without limitation, it is contemplated that the validated profiles database may include one or more of the following: the user identifier (e.g., user name or "nickname"); claimed user age or age category; a list of proof-of-age challenges that were posed to the user and the user responses; and indicia of which proof-of-age challenges were answered correctly or incorrectly; and the validated profiles database may include cumulative data/information associated with multiple validation attempts. The application platform may use this information, in whole or in part, to confirm the user profile and to determine which Internet content may be accessed coincident to Internet access requests from the user.

If the challenges are not sufficiently answered, the application platform 106 rejects the user profile at step 212. Optionally, at step 214, the application platform 106 may store rejected profiles and associated data in a rejected profiles database (not shown), or may include rejected profile information in the validated profiles database 128. As will be appreciated, the rejected profiles information may include much of the same type of information (e.g., indicia of which challenges were answered correctly or incorrectly, and so forth) as noted with respect to validated profiles.

It is noted, of course, the application platform may or may not determine the actual age of the user 108 based on the user responses to the proof-of-age challenges but rather validates (or not) the claimed user age. To the extent the application platform determines a user age, it may be considered a "characteristic age" of the user based on the user's replies to the proof-of-age challenges (i.e., corresponding to the age or age category of the proof-of-age challenges that were sufficiently answered). As such, the "proof-of-age" challenges may be considered to comprise a tool for determining the characteristic age of the user, not the actual age, of the user. Accordingly, validation (or rejection) of a user profile based on the "proof-of-age" challenges shall be understood to be a validation (or rejection) of the claimed user age relative to the characteristic age or estimated age, not the actual age, of the user.

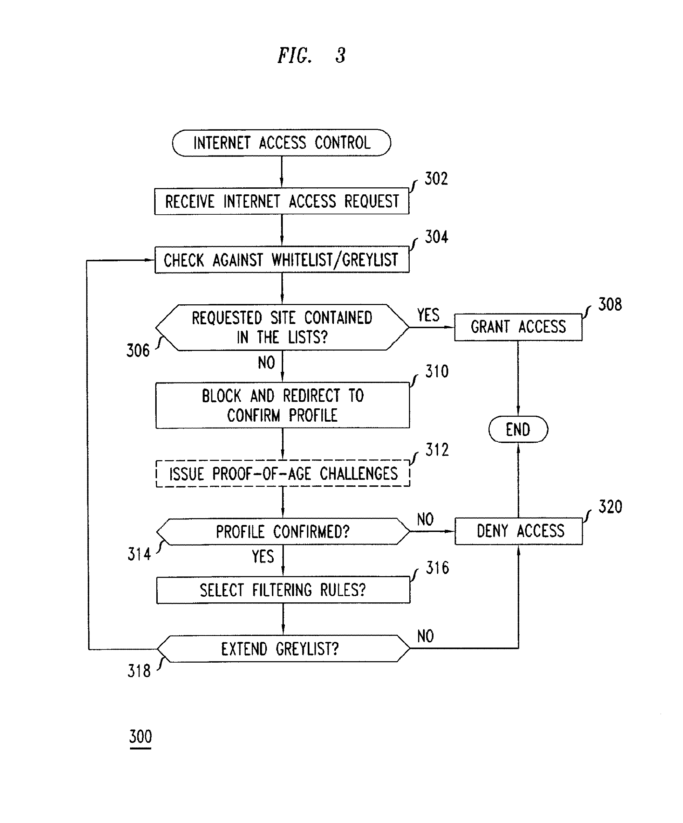

Now turning to FIG. 3, there is a flowchart showing steps performed to execute user access control and filtering features of the hosted parental control system of FIG. 1. The steps of FIG. 3 are performed, where applicable, by the application platform 106 in conjunction with the user 108 operating the user platform 102 to execute an access control protocol 122.

At step 302, the application platform 106 receives an Internet access request from a user 108 specifying particular Internet content that is desired to be accessed by the user. For example and without limitation, the user may enter indicia of a desired file resource on the Internet, such as a web page, an image file, an application program or the like by entering a URL (Uniform Resource Locator) associated with the file resource in the address line of their web browser; or the user may simply click on a URL associated with the file resource if it is specified in a hypertext link. The user may or may not have previously created a user profile such as described in relation to FIG. 2.

In one embodiment, the application platform intercepts the Internet access request and executes various filtering functions described hereinafter to either grant access or deny access to the requested Internet contents. Alternatively or additionally, the Internet access request may comprise a user command or instruction affirmatively sent to the application platform, separately or coincidentally to entering indicia of particular Internet content that is desired to be accessed by the user.

At step 304, the application platform checks the requested Internet content against a whitelist and/or greylist, i.e., to determine whether the user is cleared to access the requested Internet content. According to one example, the "whitelist" identifies content that is authorized for users of all ages, irrespective of whether the user has created a user profile; whereas a "greylist" identifies content that is authorized for the user that is currently browsing the web, based on the validated age or age category of the user provided the user has previously created a user profile. Optionally, the user profile may be subject to expiration after a designated time period or number of access requests, after which the user may be prompted to answer additional proof-of-age challenges to reconfirm the user profile to continue access to greylist content.

If the requested site is contained in or is otherwise identifiable from the list, determined at step 306, the application platform grants access to the requested content at step 308; otherwise the application platform blocks access to the requested content at step 310 and the user is redirected to answer one or more proof-of-age challenges to confirm (or create, if applicable) a user profile.

Thus, a user having a validated (and unexpired) user profile has access to whitelist and greylist content, whereas a user not having created a user profile (or having an expired user profile) has access to whitelist content but no greylist content, until such time that they reconfirm (or create, if applicable) a validated user profile.

Alternatively or additionally to checking a whitelist and/or greylist, the application platform may check the requested Internet content against a blacklist defining Internet content that is not authorized for the particular user, user age or user category. In such case, access may be granted if the requested site is not contained in the blacklist or not granted if the requested site is contained in the blacklist.

As will be appreciated, the whitelist, greylist or blacklist may be implemented in a variety of ways including, for example and without limitation, a list of specific authorized (in the case of a whitelist or greylist) or unauthorized (in the case of a blacklist) URLs, verified DNS domain names or other file resource identifiers, or optionally keywords or applications for particular users, ages, or age categories, or an index that associates various URLs or other file resource identifiers with content rating that may be correlated to particular ages or age categories to determine if the requested content is authorized or unauthorized for the current user.

In one embodiment, the step of reconfirming of a user profile at step 310 is accomplished by prompting the user to provide his/her user identifier (e.g., user name or "nickname") and optionally, password to the application platform 206. Thereafter, the application platform consults the validated profiles database 128 to find relevant information corresponding to the nickname and/or password. For example and without limitation, the application platform may find the previously validated user age or age category, the list of proof-of-age challenges that were posed to the user and the user responses; indicia of which proof-of-age challenges were answered correctly or incorrectly; and cumulative data/information associated with multiple validation attempts. The application platform may further consult the device capabilities database to determine the device capabilities of the user platform. The application platform may use this information, in whole or in part, to select one or more new proof-of-age challenges to be used to reconfirm the user profile. (Advantageously, but without limitation, the "new" proof-of-age challenges will include new challenges relative to the previously issued challenges, however, they may include one or more previously issued challenges.)

Further, because competencies may vary depending on children, the proof-of-age challenges issued to reconfirm a user profile may include one or more personal challenges unique to the claimed identity of the user, for example corresponding to user preferences, hobbies or the like. In one example, personal challenges relating to hobbies of the claimed identity may be issued following false answers to one or more general questions to reconfirm the user profile.

At step 312, the application platform issues the new proof-of-age challenges; and at step 314, the application platform evaluates the user responses to the new proof-of-age challenges to determine whether the profile is confirmed or not confirmed. Optionally, the application platform may issue a CAPTCHA challenge-response test to ensure that the responses are generated by a human user, rather than a computer. It is contemplated that the number of new challenges may be relatively fewer (for example, two or three) to reconfirm the user profile than the number of challenges issued to initially create the previous user profile. Similarly to evaluation of answers coincident to creating the user profile, the application platform might require that all of the new challenges are answered successfully, or perhaps may require a significant percentage, but not all, of the challenges to be successfully answered to reconfirm the claimed age or age category of the user 108.

If the user profile is confirmed, the application platform selects filtering rules at step 316 corresponding to the reconfirmed age or age category of the user 108. For example, the application platform may re-authorize user access to greylist content, responsive to reconfirming the user profile. Or the application platform may extend the greylist to include the requested content of the current browsing session. The application platform executes the selected filtering rules, for example, to reauthorize and/or extend the greylist (or not) at step 318 and then returns to step 304 to perform a second check of the requested Internet content against the whitelist and/or greylist so as to possibly grant access to the content at step 308.

If the user profile is not reconfirmed, or if the application platform does not extend the greylist to include the requested content of the current browsing session, the application platform denies access to the requested content at block 320.

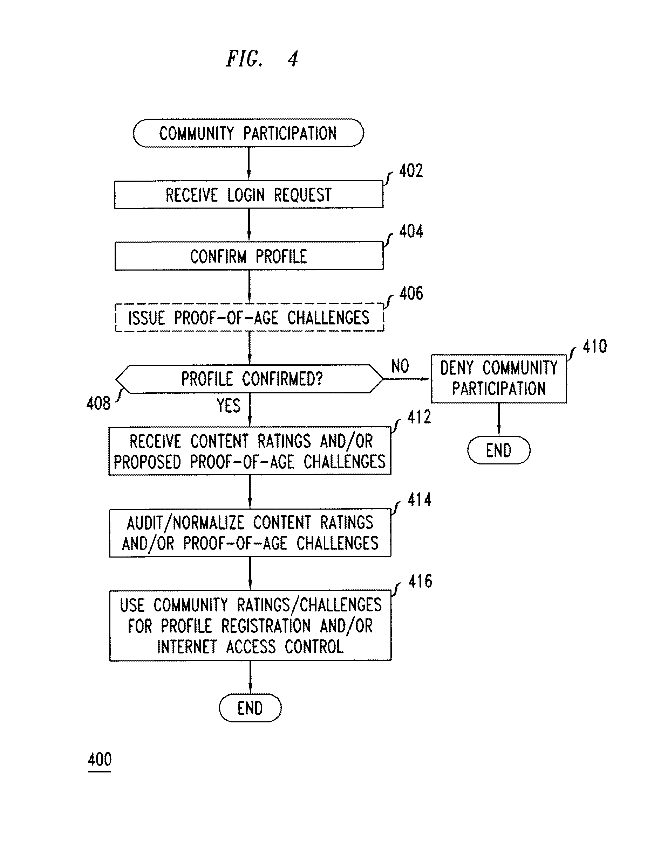

FIG. 4 is a flowchart showing steps performed to allow for community participation in the hosted parental control system of FIG. 1. The term "community participation" as used herein, refers generally to participation of the community-at-large including, for example, Internet users from the general public, in contrast to formal authorities or institutional users that may contribute proof-of-age challenges and/or content ratings in the hosted parental control system of FIG. 1. The steps of FIG. 4 are performed, where applicable, by the application platform 106 in conjunction with one or more registered users 108 of the community-at-large.

At step 402, the application platform 106 receives a login request from a registered user 108. The login request may include, for example and without limitation, the user name or nickname and optionally, password uniquely associated with the user 108. Thereafter, the application platform confirms the user profile at step 404, optionally by issuing one or more proof-of-age challenges at step 406 substantially as described in relation to FIG. 3. Optionally, the application platform may issue a CAPTCHA challenge-response test to ensure that the responses are generated by a human user, rather than a computer.

If the profile is not confirmed, community participation is denied to the user at step 410. But if the profile is confirmed, the application platform at step 412 receives one or more proof-of-age challenges and/or content ratings proposed by the user which are stored in database 126 and/or 130. In one embodiment, the user is only allowed to contribute proof-of-age challenges and/or content ratings that affects the users validated age or age category or below. In such manner, a user can not influence proof-of-age challenges or content ratings of higher ages or age categories. For example, only an adult can issue 'adult' proof-of-age challenges or rate a web site as 'adult'.

As will be appreciated, it is quite critical that community-proposed challenges and content ratings be subject to review before acceptance and use in the hosted parental control system of FIG 1. Accordingly, proposed proof-of-age challenges and/or content ratings are audited and normalized at step 414. For example and without limitation, it is contemplated that a web forum be utilized to receive and audit community proposed challenges. As new challenges are proposed to the web forum, they are reviewed and discussed among the members of the forum and subject to a vote from experienced forum users. Challenges that receive enough positive votes (e.g., at least two) are accepted as "official" and eligible to be used at step 416 for profile registration and/or access control. Similarly, content ratings reviewed by a configured amount of experienced users (e.g., at least two) are normalized and then added to the database 130 for use in the hosted parental control system. A given user gains experience in the forum by proposing new challenges and/or new content ratings, particularly challenges or content ratings that have gained acceptance by the forum.

Alternatively or additionally, community proposed content or URL ratings may be facilitated by web programming APIs connecting users browsing external sites to the hosted parental control system of FIG. 1. For example, a user browsing or recommending an external site might click on a "rate it" button to provide a rating, proposed age or age category or the like for use in the hosted parental control system. Ratings might also be introduced on search engine sites, blogs, etc. using an appropriate API interface to the hosted parental control system.

FIGS. 1-4 and the foregoing description depict specific exemplary embodiments of the invention to teach those skilled in the art how to make and use the invention. The described embodiments are to be considered in all respects only as illustrative and not restrictive. The present invention may be embodied in other specific forms without departing from the scope of the invention which is indicated by the appended claims. All changes that come within the meaning and range of equivalency of the claims are to be embraced within their scope.

For example, the described embodiments herein refer to parental control tools for protecting children or underage users from accessing age-inappropriate Internet content. However, it will be appreciated that the embodiments described herein are not limited to parental control tools per se, but rather may be exercised by any responsible controlling person or authority, including organizational or governmental authority, to filter content from users ("protected users") of a protected age or age category, or exhibiting characteristics of a protected age or age category. For example, the embodiments are not limited to protecting child or underage users per se, but may be applied more generally to protect users of any age exhibiting a child-like characteristic intelligence or mentality including, without limitation, elderly or mentally-disabled adult users. Further, as will be appreciated, the embodiments described herein may be viewed as enabling access to content by authorized users, defining users that are not of a protected age or age category and who do not exhibit characteristics of a protected age or age category.

The term "user platform" as used herein is generally defined as any communication device including, without limitation, laptop computer, desktop computer, personal computer (PC), television or mobile computing device, including, without limitation, personal digital assistant (PDA), tablet PC or mobile phone, nominally including a web browser, and which is subject to use by a user (i.e., person) for accessing (or attempting to access) Internet contents.

The term "application platform" as used herein is generally defined as any computer device or software application residing remotely from the user platform that executes an application program to perform some kind of activity or transaction with the user. For example, in embodiments described herein, an application platform executes access control protocols including proof-of-age challenges and filtering criteria to protect children from confronting age-inappropriate content. The application platform may include, without limitation, web-based platforms, or platforms residing internal to the firewall of a business or government enterprise.

The terms "user request" or "user command" as used herein are generally defined as any instance of communication from the user to an application platform that causes the application platform to perform some sort of transaction or segment of a transaction. User requests may comprise, without limitation, user keystrokes, keystroke combinations, or keystroke representations (e.g., ASCII representations of user keystrokes or combinations), keypad entries or combinations or representations thereof, conveying instructions or information to the application platform.

## Claims

1. In a computer system including a user platform operably connected to an application platform, wherein the user platform is associated with a user, and wherein the application platform is operable to control user access to one or more instances of Internet contents, a method comprising the application platform:
receiving indicia of a claimed user age proffered by the user;
issuing one or more proof-of-age challenges to ascertain the validity of the claimed user age, wherein the claimed user age is validated if the user sufficiently answers a number of proof-of-age challenges corresponding to the claimed user age, yielding a validated characteristic age;
creating a user profile based on the validated characteristic age, the user profile including a user identifier and indicia of the validated characteristic age; and
controlling access to Internet contents based on the user profile.

2. The method of claim 1, wherein the step of issuing one or more proof-of-age challenges comprises:
maintaining a database including a plurality of proof-of-age challenges corresponding to expected competencies of various user ages or age categories, at least a portion of the challenges defining community proposed challenges;
selecting one or more proof-of-age challenges corresponding to the claimed user age, yielding one or more selected challenges; and
querying the user with the selected challenges to ascertain the validity of the claimed user age.

3. The method of claim 1, wherein the step of controlling access to Internet contents comprises:
receiving an Internet access request from the user;
evaluating the Internet access request against selected filtering criteria, wherein at least a portion of the filtering criteria defines authorized Internet contents based on the validated characteristic age of the user; and
if the Internet access request corresponds to authorized Internet contents, granting Internet access to the user.

4. The method of claim 3, further comprising:
if the Internet access request does not correspond to authorized Internet contents, redirecting the user to confirm the user profile; and
responsive to the user confirming the user profile, yielding a confirmed user profile, controlling access to Internet contents based on the confirmed user profile.

5. Apparatus for controlling user access to Internet contents, in accordance with a computer system including a user platform operably connected to an application platform, the apparatus at the application platform comprising:
a memory; and
at least one processor coupled to the memory and configured to:
receive indicia of a claimed user age proffered by the user;
issue one or more proof-of-age challenges to ascertain the validity of the claimed user age, wherein the claimed user age is validated if the user sufficiently answers a number of proof-of-age challenges corresponding to the claimed user age, yielding a validated characteristic age;
create a user profile based on the validated characteristic age, the user profile including a user identifier and indicia of the validated characteristic age; and
control access to Internet contents based on the user profile.

6. The apparatus of claim 5, wherein the processor is further configured to:
receive an Internet access request from the user;
evaluate the Internet access request against selected filtering criteria, wherein at least a portion of the filtering criteria defines authorized Internet contents based on the validated characteristic age of the user; and
if the Internet access request corresponds to authorized Internet contents, grant Internet access to the user.

7. The apparatus of claim 6, wherein the processor is further configured to:
if the Internet access request does not correspond to authorized Internet contents, redirect the user to confirm the user profile; and
responsive to the user confirming the user profile, yielding a confirmed user profile, control access to Internet contents based on the confirmed user profile.

8. A method comprising:
intercepting an Internet access request of a user;
issuing one or more of the proof-of-age challenges to ascertain a characteristic age of the user;
evaluating the Internet access request against selected filtering criteria, wherein at least a portion of the filtering criteria defines authorized Internet contents based on the characteristic age of the user; and
if the Internet access request corresponds to authorized Internet contents, granting Internet access to the user.

9. The method of claim 8, wherein the step of issuing one or more proof-of-age challenges is accomplished coincident to establishing a user profile, the method further comprising:
if the Internet access request does not correspond to authorized Internet contents, issuing one or more additional proof-of-age challenges to confirm the user profile, yielding a confirmed user profile; and
controlling access to Internet contents based on the confirmed user profile.

10. The method of claim 8 or 9, wherein the step of issuing one or more proof-of-age challenges comprises:
maintaining a database including a plurality of proof-of-age challenges corresponding to expected competencies of various user ages or age categories, at least a portion of the challenges defining community proposed challenges; and
querying the user with a selected number of the proof-of-age challenges to ascertain the characteristic age of the user.
